# FASCICULE DE BREVET EUROPEEN

(11) **EP 0 462 036 B1**
(45) Date de publication et mention de la délivrance du brevet: **10.03.1993**
(21) Numéro de dépôt: 91420198.3
(22) Date de dépôt: 17.06.1991
(51) Int. Cl.: E03B 9/10, F16L 27/12

(54) **Bouche à clé avec réhausse de bouche**
Hydranten mit Erhöhung
Hydrant with raising

(30) Priorité: 15.06.1990 FR 9007888
(43) Date de publication de la demande: 18.12.1991
(73) Titulaire: SOCIETE ANONYME DITE : SODIF, F-69700 Givors (Rhône) (FR)
(72) Inventeur: Monneret, Jean Jacques, F-69100 Villeurbanne (Rhône) (FR)
(74) Mandataire: Perrier, Jean-Pierre

(56) Documents cités:
- GB-A- 1 038 055
- US-A- 1 485 047
- US-A- 2 691 384

## Description

Il est déjà connu de réaliser des bouches à clé dont le corps est composé d'un support inférieur et d'une réhausse pouvant coulisser verticalement dans ce support et comportant, en partie supérieure, des moyens de positionnement et de verrouillage pour un tampon de fermeture.

De telles bouches à clé à réhausse sont utilisées sur les chaussées et sur toute autre voie devant recevoir un revêtement de hauteur non standard, mais définie.

Le problème à la base de l'invention est celui du calage vertical de la réhausse dans son support pour la maintenir à la hauteur voulue, de sa pose sur le soljusqu'à mise en place du revêtement.

Avec un corps composé d'une réhausse tubulaire coulissant dans un support, au moins partiellement tubulaire, le calage est effectué en interposant sous la collerette externe de la réhausse, une tige verticale ou des matériaux divers, tels que graviers. L'usage montre que ce mode de réglage n'est pas fiable.

Avec les corps composés d'une réhausse filetée extérieurement, et se vissant dans le support, le réglage est fiable et plus précis, mais il fait appel à deux filetages, c'est à dire à des moyens onéreux, augmentant le coût de la réhausse et de la bouche.

On connaît par le brevet US-A-2 691 384 une bouche à clé comprenant un corps tubulaire, une réhausse de bouche, une gorge ménagée dans le corps et contenant un joint en serrage sur la réhausse de bouche.

Un tel dispositif ne peut être appliqué au calage de la réhausse d'une bouche à clé car l'introduction, sur le chantier, de poussières ou gravillons dans la gorge peut perturber le réglage, et voire même le rendre inopérant.

Par ailleurs, si ce moyen fonctionne bien avec un piston usiné présentant une constance dimensionnelle, il ne peut pas assurer un calage régulier avec une pièce brute de fonderie présentant des variations dimensionnelles, en raison de la plus grande plage de ses tolérances de fabrication.

La présente invention a pour but de fournir une bouche à clé avec réhausse réglable en hauteur qui soit peu onéreuse, fiable, et aisément nettoyable avant montage.

A cet effet, dans la bouche à clé selon l'invention, le joint est constitué par une bague torique en matériau synthétique qui, ayant une dureté Shore, comprise entre 60 et 70, est montée sur le corps tubulaire de la réhausse avec un préserrage diamétral compris entre 3 et 7 %, lui laissant la possibilité de rouler sur cette partie pour réglage de sa position verticale, tandis que la gorge, avec laquelle cette bague coopère, est ménagée à l'extrémité supérieure du corps de la bouche, débouche verticalement de cette extrémité pour accueillir le joint, et comporte un diamètre de fond de gorge apte à exercer sur la bague un serrage diamétral complémentaire de blocage compris entre 0,5 et 1,5 %.

Avec cet agencement, la gorge peut facilement être nettoyée avant utilisation des moyens de calage et la bague torique, montée serrée sur la réhausse, peut être aisément déplacée par roulage autour de son axe moyen, sur la face brute de fonderie de la réhausse. Lorsque le réglage de sa position verticale est terminé, son engagement avec serrage dans la gorge ouverte du corps augmente son serrage sur la réhausse et assure le calage vertical de celle-ci par rapport au support. Ce moyen, simple à mettre en oeuvre, permet d'obtenir un calage fiable, pouvant être réajusté si le besoin s'en fait sentir.

Par ailleurs, l'interposition de la bague entre la réhausse et le support assure l'étanchéité de cette liaison et, en particulier, s'oppose au passage de sable ou de fines diverses par l'intervalle entre les éléments du corps de bouche à clé, donc, au passage de tous matériaux fins de revêtement à l'intérieur de ce corps, ce qui évite le colmatage de la bouche.

D'autres caractéristiques et avantages ressortiront de la description qui suit en référence aux dessins schématiques annexés représentant, à titre d'exemple non limitatif, une forme d'exécution de cette bouche à clé avec réhausse de bouche.
Figure 1 est une vue de côté en coupe transversale de la réhausse,
Figure 2 est une vue de côté en coupe transversale de l'ensemble de la bouche à clé, la partie gauche de la figure représentant la bouche après sa pose sur le sol et la partie droite après mise en place du revêtement.

De façon connue, le corps de la bouche à clé est composé d'un support inférieur 2 et d'une réhausse 3. Le support 2 comporte une embase 4 de laquelle fait saillie, vers le haut, une partie tronconique 5 prolongée par une partie tubulaire 6 avec collerette périphérique 7. La réhausse 3 est constituée par un corps tubulaire 8 pouvant coulisser librement et avec jeu dans la partie tubulaire 6 du corps 2. A son extrémité supérieure, le corps tubulaire 8 de la réhausse est muni d'un renflement 9 se terminant par une collerette 10. Dans la partie interne supérieure du renflement 9, la réhausse est munie de plusieurs logements périphériques 12, communiquant avec des rainures verticales 13, destinées à constituer moyens de verrouillage d'ergots radiaux ménagés à la périphérie du tampon d'obturation non représenté, de la bouche à clé.

Les deux éléments du corps sont des pièces moulées en fonte à graphite sphéroïdal et présentent des faces lisses à faible rugosité.

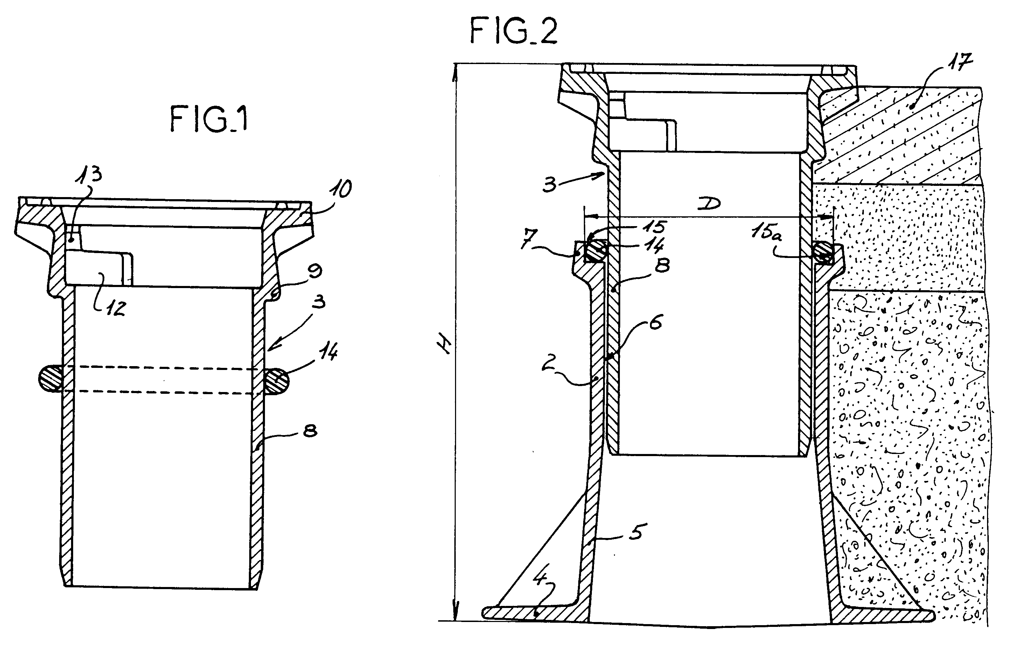

Les moyens de calage de la réhausse 3 dans le support 2 sont constitués par une bague torique 14, en matériau synthétique, monté avec serrage sur la périphérie de la partie tubulaire 8 de la réhausse, comme le montre la figure 1. Le matériau constitutif de la bague 14 a une dureté Shore comprise entre 60 et 70. La bague peut être constituée par une corde en néoprène, dont les extrémités sont liées après aboutement, ou par un tore continu en néoprène.

Le serrage diamétral de la bague 14 sur la périphérie de la partie tubulaire 8 est compris entre 3 et 7 %, c'est à dire est suffisant pour caler la bague sur la réhausse, sans pour autant s'opposer au déplacement de cette bague sur cette réhausse en la faisant rouleur sur elle-même.

A titre d'exemple, lorsque le diamètre extérieur de la partie tubulaire 8 de la réhausse a une valeur de 108 mm, le daimètre intérieur de la bague 14 a une valeur de 102,5 mm et le diamètre du tore est de 12 mm.

Les moyens de calage comprennent aussi une gorge 15 qui est ménagée dans la partie interne de la collerette 7 du support 2. Le dimaètre D de la face périphérique 15a de cette gorge a une valeur qui est déterminée pour fournir un serrage diamétral complémentaire à la bague torique 14 de l'ordre de 0, 5 à 1, 5 %. A titre d'exemple et pour la bague 14 dont les dimensions ont été indiquées ci dessus, la valeur D de ce diamètre est de 130 mm alors que le diamètre extérieur de la bague, serrée sur la réhausse, est de l'ordre de 131 mm.

Grâce à cet agencement, et après que l'opérateur ait nettoyé la gorge, ait posé le support 2 sur le sol et ajusté la position de la bague 14 sur la réhausse 3, la seule mise en place de la réhausse dans le support 2, avec engagement de sa bague dans la gorge 15, provoque, sur cette bague, un serrage radial complémentaire se répercutant sur la réhausse et assurant ainsi le calage en position verticale de la réhausse par rapport au support 2.

On conçoit ainsi qu'il est très aisé d'ajuster précisément la hauteur H du corps de la bouche à clé en fonction des besoins.

Grâce au serrage procuré par la gorge, cet ajustement est verrouillé jusqu'à mise en place autour de la bouche du revêtement de chaussée 17 assurant, lui, le calage définitif du positionnement.

Il est évident que la gorge 15 est utilisée brute de fonderie, c'est à dire sans aucun usinage complémentaire, grâce à l'élasticité du joint qui compense les variations dimensionnelles dues aux tolérances de fabrication.

Il ressort de ce qui précède que ces moyens de calage sont peu onéreux à réaliser, sont faciles à mettre en oeuvre et procurent un calage fiable de la réhausse par rapport au support 2, quelle que soit la valeur de la hauteur qui doit être donnée au corps de la bouche.

## Revendications

1. Bouche à clé du type comprenant un corps tubulaire (2), une gorge (15) ménagée dans ce corps, une réhausse de bouche (3) réglable longitudinalement dans le corps, et un joint en serrage sur la réhausse de bouche, **caractérisée en ce que** le joint (14) est constitué par une bague torique en matériau synthétique qui, ayant une dureté Shore, comprise entre 60 et 70, est montée sur le corps tubulaire (3) de la réhausse avec un préserrage diamétral compris entre 3 et 7 %, lui laissant la possibilité de rouler sur cette partie pour réglage de sa position verticale, tandis que la gorge, avec laquelle cette bague coopère, est ménagée à l'extrémité supérieure du corps (2) de la bouche, débouche verticalement de cette extrémité pour accueillir le joint, et comporte un diamètre de fond de gorge (15a) apte à exercer sur la bague (14) un serrage diamétral complémentaire de blocage compris entre 0,5 et 1,5 %.

2. Bouche à clé selon la revendication 1, **caractérisée en ce que** la bague (14) est constituée par une corde en néoprène dont les extrémités sont liées après aboutement.

3. Bouche à clé selon la revendication 1, **caractérisée en ce que** la bague est constituée par un tore continu en néoprène.

## Patentansprüche

1. Schachtauskleidung, insbesondere als Teil eines Absperrschiebers, umfassend:
- ein rohrförmiges Hauptstück (2),
- eine in diesem Hauptstück ausgebildete Auskehlung (15),
- ein in dem Hauptstück longitudinal verstellbares Schacht-Erhöhungsteil (3) und
- ein Klemmverbindungsmittel auf dem Schacht-Erhöhungsteil,
**dadurch gekennzeichnet**, daß das Klemmverbindungsmittel (14) durch einen torischen Ring aus Kunststoff gebildet ist, der eine Shore-Härte zwischen 60 und 70 aufweist, und auf dem rohrförmigen Hauptstück (3) des Erhöhungsteils mit einer Vorspannung entsprechend einer Durchmesseraufweitung von zwischen 3 und 7 % angebracht ist, so daß der Ring zur Verstellung seiner vertikalen Position auf diesem Bereich rollbar ist, und daß die Auskehlung, mit welcher dieser Ring zusammenwirkt, am oberen Ende des Hauptstücks (2) des Schachts ausgebildet ist und zum Aufnehmen des Klemmverbindungsmittels vertikal in dieses Ende einmündet, wobei die Auskehlung einen Auskehlungs-Grunddurchmesser (bei 15a) aufweist, der geeignet ist, auf den Ring (14) eine komplementäre Drückung entsprechend einer Durchmesserverringerung von zwischen 0,5 und 1,5 % auszuüben.

2. Schachtkauskleidung nach Anspruch 1, dadurch gekennzeichnet, daß der Ring (14) ein Seil aus Kunststoff ist, dessen Enden nach dem Gegeneinanderstoßen verbunden sind.

3. Schachtauskleidung nach Anspruch 1, dadurch gekennzeichnet, daß der Ring ein endloser Torus aus Kunststoff ist.

## Claims

1. A hydrant of the type including a tubular body (2), a groove (15) formed in this body, hydrant raising means (3) adjustable longitudinally in the body, and a joint tightened on the hydrant raising means, characterised in that the joint (14) is constituted by a toric ring of synthetic material which, having a Shore hardness between 60 and 70, is mounted on the tubular body (3) of the raising means with a diametral pretightening of between 3 and 7%, allowing it the possibility of rolling on this portion in order to adjust its vertical position, whilst the groove with which this ring cooperates is formed at the upper end of the body (2) of the hydrant, opens vertically from this end to receive the joint, and has a groove base (15a) diameter adapted to exert on the ring (14) an additional diametral tightening of between 0.5 and 1.5%.

2. A hydrant according to Claim 1, characterised in that the ring (14) is constituted by a cord of synthetic material, of which the ends are fastened after abutment.

3. A hydrant according to Claim 1, characterised in that the ring is constituted by a continuous annulus of synthetic material.
